(19) **Europäisches Patentamt**
**European Patent Office**
**Office européen des brevets**

(11) **EP 3 345 979 B1**

(12) **EUROPEAN PATENT SPECIFICATION**

(45) Date of publication and mention
of the grant of the patent:
**23.08.2023 Bulletin 2023/34**

(21) Application number: **16841339.1**

(22) Date of filing: **26.07.2016**

(51) International Patent Classification (IPC):
*C09J 7/38* (2018.01)      *B32B 27/00* (2006.01)
*B32B 27/30* (2006.01)      *B32B 27/42* (2006.01)
*C09J 153/02* (2006.01)

(52) Cooperative Patent Classification (CPC):
(C-Sets available)
**C09J 7/387; C09J 153/02;** C09J 2301/124;
C09J 2400/226; C09J 2400/263      (Cont.)

(86) International application number:
**PCT/JP2016/071893**

(87) International publication number:
**WO 2017/038307 (09.03.2017 Gazette 2017/10)**

(54) **PRESSURE-SENSITIVE ADHESIVE SHEET**

HAFTKLEBEFOLIE

FEUILLE ADHÉSIVE SENSIBLE À LA PRESSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.08.2015 JP 2015170076
25.07.2016 JP 2016145330**

(43) Date of publication of application:
**11.07.2018 Bulletin 2018/28**

(73) Proprietor: **Nitto Denko Corporation
Ibaraki-shi, Osaka 567-8680 (JP)**

(72) Inventors:
• **OKAHARA, Kai
Ibaraki-shi
Osaka 567-8680 (JP)**
• **OOTAKE, Hironao
Ibaraki-shi
Osaka 567-8680 (JP)**
• **TAKAHASHI, Akiko
Ibaraki-shi
Osaka 567-8680 (JP)**

(74) Representative: **Müller-Boré & Partner
Patentanwälte PartG mbB
Friedenheimer Brücke 21
80639 München (DE)**

(56) References cited:
EP-A1- 2 848 665      WO-A1-2013/094760
WO-A1-2014/033770      WO-A1-2015/111674
JP-A- H06 271 820      JP-A- H09 157 599
JP-A- H10 279 897      JP-A- H11 106 730
JP-A- 2013 216 852      JP-A- 2015 028 146
US-A1- 2015 079 388

EP 3 345 979 B1

**(Cont. next page)**

(52) Cooperative Patent Classification (CPC): (Cont.)

C-Sets
**C09J 153/02, C08L 93/00, C08L 93/00**

## Description

The present invention relates to a pressure-sensitive adhesive sheet.

In general, pressure-sensitive adhesive (PSA) exists as a soft solid (a viscoelastic material) in a room temperature range and has a property to adhere easily to an adherend with some pressure applied. Taking advantage of such a property, PSA has been widely used as a means of attachment that works efficiently and produces dependable adhesion in various industrial fields from home appliances to automobiles, OA equipment, and so on. A typical composition of PSA comprises a base polymer and a tackifier resin. As the base polymer, a polymer that exhibits rubber elasticity at room temperature can be preferably used. For example, Patent Documents 1 to 3 describe PSA that comprises a styrene-based block copolymer, such as styrene-isoprene-styrene block copolymer and styrene-butadiene-styrene block copolymer.

Patent Document 1: Japanese Patent Application Publication No. 2001-123140
Patent Document 2: Japanese Patent Application Publication No. 2001-342441
Patent Document 3: Japanese Patent Application Publication No. H10-287858

Further, a pressure-sensitive adhesive sheet is also known from each of JP 2015 028146 A, US 2015/079388 A1, EP 2 848 665 A1 and JP 2013 216852 A.

With respect to PSA whose base polymer is such a block copolymer (e.g. styrene-based block copolymer) of a monovinyl-substituted aromatic compound and a conjugated diene compound, when it is desired to enhance adhesive properties (e.g. adhesive strength and shear property) at room temperature, a blending means is selected so as to increase the elastic modulus of the PSA (to harden the PSA). However, such design tends to cause significant degradation of the adhesive properties at low temperatures (typically, repulsion resistance in a low temperature environment, or low-temperature repulsion resistance). As for the PSA whose polymer is such a block copolymer, it will be beneficial to improve the low-temperature repulsion resistance while maintaining the shear property which is a typical adhesive property.

An objective of the present invention is to provide a PSA sheet that comprises a PSA layer whose base polymer is a block copolymer (e.g. a styrene-based block copolymer) of a monovinyl-substituted aromatic compound and a conjugated diene compound, with the PSA sheet having excellent shear property and improved low-temperature repulsion resistance.

The present invention provides a PSA sheet comprising a PSA layer that comprises a tackifier resin as the base polymer. The base polymer is a block copolymer of a monovinyl-substituted aromatic compound and a conjugated diene compound. The tackifier resin content is 10 parts to 60 parts by weight to 100 parts by weight of the base polymer. The tackifier resin comprises a tackifier resin $T_H$ having a softening point of 100 °C or higher. The tackifier resin $T_H$ content is at least 10 parts by weight to 100 parts by weight of the base polymer. The ratio of the tackifier resin $T_H$ in the total tackifier resin content is 50 % by weight or greater. The tackifier resin $T_H$ comprises a terpene phenol resin as a tackifier resin $T_{H1}$. The terpene phenol resin has a softening point of 120 °C or higher and 200 °C or lower. The terpene phenol resin content is 10 parts to 30 parts by weight to 100 parts by weight of the base polymer. The adhesive face of the PSA layer has properties such that a ball tack test results in Ball No. 4 or higher in an environment at 0 °C. In an embodiment using a PSA whose base polymer is a block copolymer of a monovinyl-substituted aromatic compound and a conjugated diene compound, the PSA sheet may show improved low-temperature repulsion resistance while maintaining excellent shear property.

Herein, and as already mentioned above, the tackifier resin $T_H$ comprises a terpene-phenol resin as the tackifier resin $T_{H1}$, and the terpene phenol resin content is 10 parts to 30 parts by weight to 100 parts by weight of the base polymer. Thereby, the present invention brings about a PSA sheet that combines shear property and low-temperature repulsion resistance.

In a preferable embodiment of the PSA sheet disclosed herein, the base polymer is a styrene-based block copolymer. In an embodiment using a PSA whose base polymer is a styrene-based block copolymer, shear property is preferably combined with low-temperature repulsion resistance. In a more preferable embodiment, the styrene content of the styrene-based block copolymer is 20 % by weight or less. The styrene-based block copolymer preferably has a diblock ratio of 60 % by weight or higher.

Brief Description of Drawings

Fig. 1 shows a schematic cross-sectional view of the constitution of the PSA sheet according to an embodiment (a substrate-containing double-faced PSA sheet).

Fig. 2 shows a schematic cross-sectional view of the constitution of the PSA sheet according to another embodiment (a substrate-free double-faced PSA sheet).

Fig. 3 shows a schematic cross-sectional view of the constitution of the PSA sheet according to another embodiment (a substrate-containing single-faced PSA sheet).

Fig. 4(a) and Fig. 4(b) illustrate the method for initial low-temperature repulsion test.

Preferred embodiments of the present invention are described below.

In the drawings referenced below, a common reference numeral may be assigned to members or sites producing the same effects, and duplicated descriptions are sometimes omitted or simplified. The embodiments described in the drawings are schematized for clear illustration of the present invention, and do not necessarily represent the accurate sizes or reduction scales of the PSA sheet of the present invention provided as an actual product.

As used herein, the term "PSA" refers to, as described earlier, a material that exists as a soft solid (a viscoelastic material) in a room temperature range and has a property to adhere easily to an adherend with some pressure applied. As defined in *"Adhesion : Fundamental and Practice"* by C. A. Dahlquist (McLaren & Sons (1966), P. 143), PSA referred to herein is a material that has a property satisfying complex tensile modulus $E^*$ (1Hz) < $10^7$ dyne/cm$^2$ (typically, a material that exhibits the described characteristics at 25 °C). The PSA in the art disclosed herein can be considered as non-volatiles in a PSA composition or the constituent of a PSA layer.

The "base polymer" of a PSA refers to the primary component among rubbery polymers (polymers that exhibit rubber elasticity in a room temperature range) contained in the PSA, that is, a component accounting for more than 50 % by weight of all rubbery polymers.

As used herein, "block copolymer of a monovinyl-substituted aromatic compound and a conjugated diene compound" refers to a polymer comprising at least one each of a segment (segment A) that comprises a monovinyl-substituted aromatic compound as a primary monomer (which refers to a copolymer component accounting for more than 50 % by weight; the same applies hereinafter) and a segment (segment B) that comprises a conjugated diene compound as a primary monomer. In general, the glass transition temperature of segment A is higher than that of segment B. Examples of a typical constitution of such a polymer include an ABA triblock copolymer having a triblock structure where segment A (hard segment) is placed at each terminal of segment B (soft segment), and an AB diblock copolymer having a diblock structure comprising one segment A and one segment B.

As used herein, "styrene-based block copolymer" refers to a polymer comprising at least one styrene block. The "styrene block" refers to a segment comprising styrene as a primary monomer. A typical example of a styrene block referred to herein is a segment consisting essentially of styrene. "Styrene-isoprene block copolymer" refers to a polymer comprising at least one styrene block and at least one isoprene block (a segment comprising isoprene as a primary monomer). Typical examples of a styrene-isoprene block copolymer include a triblock copolymer having a triblock structure where a styrene block (hard segment) is placed at each terminal of an isoprene block (soft segment), and a diblock copolymer having a diblock structure comprising one isoprene block and one styrene block. "Styrene-butadiene block copolymer" refers to a polymer comprising at least one styrene block and at least one butadiene block (a segment comprising butadiene as a primary monomer).

As used herein, "the styrene content" in a styrene-based block copolymer refers to the weight fraction of styrene residue contained in the total weight of the block copolymer. The styrene content can be measured by NMR (nuclear magnetic resonance spectroscopy).

The diblock content (which hereinafter may be referred to as the "diblock fraction" or "diblock ratio") in a styrene-based block copolymer can be determined by the following method. That is, a given styrene-based block copolymer is dissolved in tetrahydrofuran (THF) and subjected to high-performance liquid chromatography at a temperature of 40 °C with the THF as the mobile phase passing at a flow rate of 1 mL/min through four linearly connected columns consisting of two each of liquid chromatography columns GS5000H and G4000H both available from Tosoh Corporation; from the resulting chromatogram, the area of the peak corresponding to the diblock copolymer is determined; and the diblock fraction is determined as the percentage of the area of the peak corresponding to the diblock relative to the total area of all peaks.

< Examples of constitution of PSA sheet >

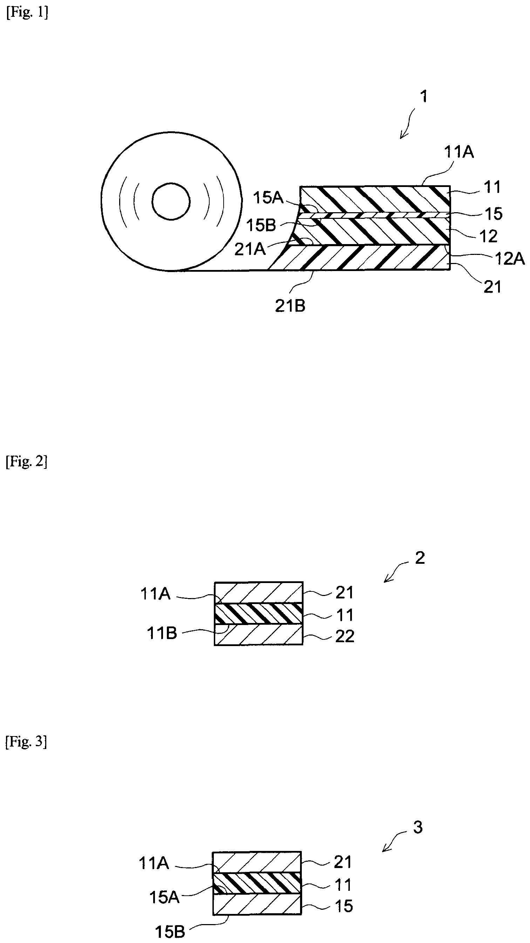

The PSA sheet disclosed herein (which can be a long sheet such as tape, etc.) may have, for example, a form of an adhesively double-faced PSA sheet having the cross-sectional structure shown in Fig. 1. A double-faced PSA sheet 1 comprises a substrate (e.g. plastic film, nonwoven fabric) 15 as well as the first and second PSA layers 11 and 12 supported by the two faces of substrate 15, respectively. More specifically, first PSA layer 11 and second PSA layer 12 are provided on first face 15A and second face 15B of substrate 15, respectively, with both faces 15A and 15B being non-releasing. Prior to use (before adhered to an adherend), as shown in Fig. 1, double-faced PSA sheet 1 can be in a roll wherein PSA sheet 1 is wound along with release liner 21 having front face (release face) 21A and back face (release face) 21B. In double-faced PSA sheet 1 in such an embodiment, the surface (second adhesive face 12A) of second PSA layer 12 and the surface (first adhesive face 11A) of first PSA layer 11 are protected with front face 21A and back face 21B of release liner 21, respectively. Alternatively, it may be in an embodiment where first adhesive face 11A and second adhesive face 12A are protected with two separate release liners, respectively.

The art disclosed herein can be applied preferably to a substrate-containing double-faced PSA sheet as shown in Fig. 1, and can also be applied to a double-faced PSA sheet 2 that is free of a substrate (i.e., having no substrate) as shown in Fig. 2. Prior to use, double-faced PSA sheet 2 can be, for instance, in an embodiment as shown in Fig. 2 where the first adhesive face 11A and the second adhesive face 11B of substrate-free PSA layer 11 are protected with release liners 21 and 22, respectively, with each release liner comprising a release face at least on the PSA-layer-side surface (front face). Alternatively, it may be in an embodiment without release liner 22, wherein both the two faces of release liner 21 are release faces, and PSA layer 11 is overlaid therewith and wound in a roll so that the back face of release liner 21 contacts and protects second adhesive face 11B.

The art disclosed herein can be applied to an adhesively single-faced, substrate-containing PSA sheet 3 as shown in Fig. 3 as well, with the PSA sheet comprising a substrate 15 and a PSA layer 11 supported by the first face (non-release face) 15A of the substrate. Prior to use, PSA sheet 3 can be, for instance, in an embodiment as shown in Fig. 3 where a surface (adhesive face) 11A of PSA layer 11 is protected with a release liner 21 comprising a release face at least on the PSA-layer-side surface (front face). Alternatively, it may be in an embodiment without release liner 21, wherein substrate 15 comprises a release face on second face 15B, and substrate-containing PSA sheet 3 is wound in a roll so that second face 15B of substrate 15 contacts and protects first adhesive face 11A.

<PSA layer>

(Base polymer)

The PSA layer disclosed herein comprises as a base polymer a block copolymer of a monovinyl-substituted aromatic compound and a conjugated diene compound. The monovinyl-substituted aromatic compound refers to a compound in which a functional group containing a vinyl group is bonded to an aromatic ring. Typical examples of the aromatic ring include a benzene ring (which can be a benzene ring substituted with a functional group (e.g., an alkyl group) containing no vinyl groups). Examples of the monovinyl-substituted aromatic compound include styrene, $\alpha$-methyl styrene, vinyl toluene, and vinyl xylene. Examples of the conjugated diene compound include 1,3-butadiene, and isoprene. Among such block copolymers, one species can be used solely, or two or more species can be used together as the base polymer.

Segment A (hard segment) in the block copolymer comprises the monovinyl-substituted aromatic compound (for which, two or more species can be used together) at a copolymerization ratio of preferably 70 % by weight or greater (more preferably 90 % by weight or greater, or it can be essentially 100 % by weight). Segment B (soft segment) in the block copolymer comprises the conjugated diene compound (for which, two or more species can be used) at a copoly-merization ratio of preferably 70 % by weight or greater (more preferably 90 % by weight or greater, or it can be essentially 100 % by weight). According to such a block copolymer, a PSA sheet of higher performance can be obtained.

The block copolymer may be a diblock copolymer, a triblock copolymer, a radial copolymer, a mixture of these, or the like. In a triblock copolymer or a radial copolymer, it is preferable that segment A (e.g., a styrene block) is placed at a terminal of the polymer chain. Segment A placed terminally on the polymer chain is likely to aggregate to form a domain, whereby pseudo crosslinks are formed, resulting in increased cohesive strength of the PSA.

In the art disclosed herein, from the standpoint of the adhesive strength (peel strength) to an adherend, a preferable block copolymer has a diblock fraction of 30 % by weight or greater (more preferably 40 % by weight or greater, even more preferably 50 % by weight or greater, or especially preferably 60 % by weight or greater, typically 65 % by weight or greater). From the standpoint of the peel strength, a particularly preferable block copolymer has a diblock fraction of 70 % by weight or greater. From the standpoint of the cohesive strength, etc., can be used a block copolymer having a diblock fraction of preferably 90 % by weight or smaller (more preferably 85 % by weight or smaller, e.g. 80 % by weight or smaller). For instance, a preferable block copolymer has a diblock fraction of 60 to 85 % by weight, or more preferably 70 to 85 % by weight (e.g. 70 to 80 % by weight).

(Styrene-based block copolymer)

In a preferable embodiment of the art disclosed herein, the base polymer is a styrene-based block copolymer. For instance, an embodiment wherein the base polymer comprises at least one of a styrene-isoprene block copolymer and a styrene-butadiene block copolymer is preferable. It is preferable that the styrene-based block copolymer contained in the PSA comprises either a styrene-isoprene block copolymer at a ratio of 70 % by weight or greater, a styrene-butadiene block copolymer at a ratio of 70 % by weight or greater, or a styrene-isoprene block copolymer and a styrene-butadiene block copolymer at a combined ratio of 70 % by weight or greater. In a preferable embodiment, essentially all (e.g., 95 to 100 % by weight) of the styrene-based block copolymer is a styrene-isoprene block copolymer. In another preferable embodiment, essentially all (e.g., 95 to 100 % by weight) of the styrene-based block copolymer is a styrene-butadiene block copolymer. According to such compositions, greater effects may be obtained by applying the art disclosed herein.

The styrene-based block copolymer can be a diblock copolymer, a triblock copolymer, a radial copolymer, a mixture of these, or the like. In a triblock copolymer and a radial copolymer, it is preferable that a styrene block is placed at a terminal of the polymer chain. The styrene block placed terminally on the polymer chain is likely to aggregate to form a styrene domain, whereby pseudo crosslinks are formed, resulting in increased cohesive strength of the PSA. In the art disclosed herein, from the standpoint of the adhesive strength (peel strength) to an adherend, a preferable styrene-based block copolymer has a diblock fraction of 30 % by weight or greater (more preferably 40 % by weight or greater, even more preferably 50 % by weight or greater, or especially preferably 60 % by weight or greater, typically 65 % by weight or greater). The styrene-based block copolymer may have a diblock fraction of 70 % by weight or greater (e.g., 75 % by weight or greater). From the standpoint of the cohesive strength, etc., a preferable styrene-based block copolymer has a diblock fraction of 90 % by weight or smaller (more preferably 85 % by weight or smaller, e.g. 80 % by weight or smaller). From the standpoint of combining well-balanced cohesion and low temperature repulsion resistance by applying the art disclosed herein, the styrene-based block copolymer has a diblock fraction of preferably 60 to 85 % by weight or more preferably 70 to 85 % by weight (e.g. 70 to 80 % by weight).

The styrene content in the styrene-based block copolymer can be, for instance, 5 to 40 % by weight. From the standpoint of the cohesive strength, it is preferable that the styrene content is 10 % by weight or greater (more preferably greater than 10 % by weight, e.g., 12 % by weight or greater). From the standpoint of the peel strength, the styrene content is preferably 35 % by weight or less (typically 30 % by weight or less, or more preferably 25 % by weight or less) or particularly preferably 20 % by weight or less (typically, less than 20 % by weight, e.g. 18 % by weight or less). From the standpoint of obtaining greater effects by applying the art disclosed herein, can be preferably used a styrene-based block copolymer having a styrene content of 12 % by weight or greater and less than 20 % by weight.

(Tackifier resin)

The PSA layer disclosed herein comprises a tackifier resin in addition to the base polymer. As the tackifier resin, can be used one, two or more species selected from various known tackifier resins such as petroleum resins, styrene-based resins, coumarone-indene resins, terpene resins, modified terpene resins, rosin-based resins, rosin derivative resins, and ketonebased resins, with the proviso that the tackifier resin comprises a terpene phenol resin.

Examples of petroleum resins include aliphatic (C5-based) petroleum resins, aromatic (C9-based) petroleum resins, aliphatic/aromatic copolymer (C5/C9-based) petroleum resins, and hydrogenated products of these (e.g. alicyclic petroleum resins obtainable by hydrogenating aromatic petroleum resins).

Examples of styrene-based resins include a resin comprising a styrene homopolymer as a primary component, a resin comprising an $\alpha$-methylstyrene homopolymer as a primary component, a resin comprising a vinyltoluene homopolymer as a primary component, and a resin comprising as a primary component a copolymer having a monomer composition that includes two or more species among styrene, $\alpha$-methylstyrene and vinyltoluene (e.g. an $\alpha$-methylstyrene/styrene copolymer resin comprising an $\alpha$-methylstyrene/styrene copolymer as a primary component).

As a coumarone-indene resin, can be used a resin comprising coumarone and indene as monomers constituting the backbone (main chain) of the resin. Examples of monomers that can be contained in the resin backbone other than coumarone and indene include styrene, $\alpha$-methylstyrene, methylindene, and vinyltoluene.

Examples of terpene resins include poly-$\alpha$-pinene, poly-$\beta$-pinene, poly-dipentene, etc. Examples of modified terpene resins include those obtainable from these terpene resins via modifications (phenol modification, styrene modification, hydrogenation, hydrocarbon modification, or the like). Specific examples include terpene phenol resins, styrene-modified terpene resins, and hydrogenated terpene resins.

The "terpene phenol resin" refers to a polymer containing terpene residue and phenol residue, and the scope thereof encompasses both a terpene phenol copolymer resin and a phenol-modified terpene resin, with the former being a copolymer of a terpene and a phenolic compound, and the latter being a phenol-modification product of a terpene homopolymer or a terpene copolymer (a terpene resin, typically an unmodified terpene resin). Preferable examples of a terpene constituting the terpene phenol resin include mono-terpenes such as $\alpha$-pinene, $\beta$-pinene, and limonene (including d-limonene, *l*-limonene, and *d/l*-limonene (dipentene)).

Examples of rosin-based resins include unmodified rosins (raw rosins) such as gum rosin, wood rosin, tall-oil rosin, etc.; and modified rosins obtainable from these unmodified rosins via a modification such as hydrogenation, disproportionation, and polymerization (hydrogenated rosins, disproportionated rosins, polymerized rosins, other chemically-modified rosins, etc.). Examples of rosin-derived resins include rosin esters such as unmodified rosins esterified with alcohols (i.e., esterification products of unmodified rosins) and modified rosins (hydrogenated rosins, disproportionated rosins, polymerized rosins, etc.) esterified with alcohols (i.e., esterification products of modified rosins); unsaturated fatty-acid-modified rosins obtainable from unmodified rosins and modified rosins (hydrogenated rosin, disproportionated rosin, polymerized rosin, etc.) via modifications with unsaturated fatty acids; unsaturated fatty-acid-modified rosin esters obtainable from rosin esters via modifications with unsaturated fatty acids; rosin alcohols obtainable via reduction of carboxyl groups from unmodified rosins, modified rosins (hydrogenated rosins, disproportionated rosins, polymerized rosin, etc.), unsaturated fatty-acid-modified rosins or unsaturated fatty-acid-modified rosin esters; metal salts of rosins including unmodified rosins, modified rosins, and various rosin derivatives (in particular, metal salts of rosin esters); rosin phenol resins obtainable from rosins (unmodified rosins, modified rosins, various rosin derivatives, etc.) via addition of phenol in the presence of an acid catalyst followed by thermal polymerization.

Herein, the PSA layer comprises one, two or more species of terpene phenol resin. For instance, an embodiment where the terpene phenol resin accounts for at least 25 % by weight (more preferably at least 30 % by weight) of the total tackifier resin content is preferable. The terpene phenol resin content in the total tackifier resin can be about 70 % by weight or less (e.g. 60 % by weight or less, typically 50 % by weight or less). Alternatively, of the total tackifier resin content, the terpene phenol resin may account for 50 % or more by weight, or 80 % by weight or more (e.g. 90 % by weight or more); the terpene phenol resin may account for essentially all (e.g. 95 % to 100 % by weight or even 99 % to 100 % by weight) of the tackifier resin. Herein, the terpene phenol resin content is, to 100 parts by weight of the base polymer, suitably 10 parts by weight or more (e.g. more than 10 parts by weight), preferably 15 parts by weight or more, and suitably 30 parts by weight or less (e.g. 25 parts by weight or less).

(Tackifier resin $T_H$)

The PSA layer disclosed herein comprises a tackifier resin $T_H$ having a softening point of 100 °C or higher as the tackifier resin. From the standpoint of the cohesion, the softening point of tackifier resin $T_H$ is preferably 120 °C or higher, more preferably 125 °C or higher, yet more preferably 130 °C or higher, or particularly preferably 135 °C or higher (e.g. 140 °C or higher). From the standpoint of the peel strength to an adherend, etc., the softening point of tackifier resin $T_H$ is suitably 200 °C or lower, preferably 180 °C or lower, or more preferably 170 °C or lower (e.g. 160 °C or lower).

The softening point of a tackifier resin referred to herein is defined as a value measured based on the softening point test method (ring and ball method) specified in JIS K5902 and JIS K2207. In particular, a sample is quickly melted at a lowest possible temperature, and with caution to avoid bubble formation, the melted sample is poured into a ring to the top, with the ring being placed on top of a flat metal plate. After cooled, any portion of the sample risen above the plane including the upper rim of the ring is sliced off with a small knife that has been somewhat heated. Following this, a support (ring support) is placed in a glass container (heating bath) having a diameter of 85 mm or larger and a height of 127 mm or larger, and glycerin is poured into this to a depth of 90 mm or deeper. Then, a steel ball (9.5 mm diameter, weighing 3.5 g) and the ring filled with the sample are immersed in the glycerin while preventing them from touching each other, and the temperature of glycerin is maintained at 20 °C ± 5 °C for 15 minutes. The steel ball is then placed at the center of the surface of the sample in the ring, and this is placed on a prescribed location of the support. While keeping the distance between the ring top and the glycerin surface at 50 mm, a thermometer is placed so that the center of the mercury ball of the thermometer is as high as the center of the ring, and the container is heated evenly by projecting a Bunsen burner flame at the midpoint between the center and the rim of the bottom of the container. After the temperature has reached 40 °C from the start of heating, the rate of the bath temperature rise must be kept at 5 °C ± 0.5 °C per minute. As the sample gradually softens, the temperature at which the sample flows out of the ring and finally touches the bottom plate is read as the softening point. Two or more measurements of softening point are performed at the same time, and their average value is used.

As the tackifier resin $T_H$, one, two or more species can be used among the aforementioned petroleum resins, styrene-based resins, coumarone-indene resins, terpene resins, modified terpene resins, rosin-based resins, rosin derivative resins, ketone-based resins, etc. Among them, terpene resins, terpene phenol resins, rosin phenol resins, polymerized rosins and polymerized rosin esters are preferable, with the proviso that the tackifier resin $T_H$ comprises a terpene phenol resin.

Herein, one, two or more species of terpene phenol resin are used as tackifier resin $T_{H1}$. For instance, an embodiment where the terpene phenol resin (tackifier resin $T_{H1}$) accounts for at least 25 % by weight (more preferably at least 30 % by weight) of the tackifier resin $T_H$ is preferable. The terpene phenol resin content of the tackifier resin $T_H$ can be about 70 % by weight or less (e.g. 60 % by weight or less, typically 50 % by weight or less). Alternatively, of the tackifier resin $T_H$, the terpene phenol resin (tackifier resin $T_{H1}$) may account for 50 % by weight or more, or 80 % by weight or more (e.g. 90 % by weight or more); the terpene phenol resin (tackifier resin $T_{H1}$) may account for essentially all (e.g. 95 % to 100 % by weight or even 99 % to 100 % by weight) of the tackifier resin $T_H$. Herein, the terpene phenol resin has a softening point of 120 °C or higher and 200 °C or lower (typically 130 °C or higher and 180 °C or lower; e.g. 135 °C or higher and 170 °C or lower).

The ratio of the tackifier resin $T_{H1}$ to the total tackifier resin in the PSA layer disclosed herein is not particularly limited. The ratio can be, for instance, 30 % by weight or greater (typically 40 % by weight or greater). For instance, it can be 70 % by weight or less (typically 60 % by weight or less). Alternatively, the tackifier resin $T_{H1}$ may account for essentially all (e.g. 95 % to 100 % by weight, or even 99 % to 100 % by weight) of the total tackifier resin.

The art disclosed herein can be preferably implemented in an embodiment comprising a tackifier resin $T_{H2}$ different from the tackifier resin $T_{H1}$ (a terpene phenol resin) as the tackifier resin $T_H$. The tackifier resin $T_{H2}$ preferably has a softening point lower than that of the tackifier resin $T_{H1}$ and more preferably lower by about 10 °C or more (e.g. 20 °C or more) than that of the tackifier resin $T_{H1}$. Such an embodiment can bring about, for instance, a PSA sheet with greater peel strength. From the standpoint of combining cohesion and peel strength at a high level, a tackifier resin $T_{H2}$ having a softening point of 100 °C or higher and lower than 120 °C can be preferably used. A particularly preferable tackifier resin $T_{H2}$ has a softening point of 110 °C or higher and lower than 120 °C.

As the tackifier resin $T_{H2}$, a suitable species can be selected and used among the aforementioned various tackifier resins (petroleum resins, styrene-based resins, coumarone-indene resins, terpene resins, modified terpene resins, rosin-based resins, rosin derivative resins, ketone-based resins, etc.). The art disclosed herein can be preferably implemented in an embodiment where the PSA comprises at least a petroleum resin or a terpene resin as the tackifier resin $T_{H2}$. For instance, it is preferable to select a composition in which the primary component (i.e. a component accounting for more than 50 % by weight) of the tackifier resin $T_{H2}$ is a petroleum resin, a terpene resin, a combination of a petroleum resin and a terpene resin, or the like. From the standpoint of the adhesive strength and the compatibility, an embodiment in which the primary component of the tackifier resin $T_{H2}$ is a terpene resin (e.g. $\alpha$-pinene polymer, $\beta$-pinene polymer) is preferable. The terpene resin may account for essentially all (e.g. 95 % by weight or more) of the tackifier resin $T_{H2}$.

When the PSA layer disclosed herein comprises a tackifier resin $T_{H1}$ and a tackifier resin $T_{H2}$ as the tackifier resin $T_H$, it is preferable to select their relative amounts used so that the $T_{H1}:T_{H2}$ weight ratio is 25:75 to 70:30 (more preferably 30:70 to 60:40). The art disclosed herein can be preferably implemented in an embodiment where the PSA comprises more $T_{H1}$ than $T_{H2}$ as the tackifier resin. Such an embodiment can bring about a PSA sheet that gives higher performance.

The art disclosed herein can be preferably implemented, for instance, in an embodiment that comprises a tackifier resin ($T_{HO1}$) having a hydroxyl value of 80 mgKOH/g or greater (e.g. 90 mgKOH/g or greater) as the tackifier resin $T_H$. The hydroxyl value of the tackifier resin $T_{HO1}$ is typically 200 mgKOH/g or less, or preferably 180 mgKOH/g or less (e.g. 160 mgKOH/g or less). PSA comprising a tackifier resin $T_{HO1}$ can bring about a PSA sheet that provides higher performance. For instance, the resulting PSA sheet may combine cohesion and other properties (e.g. low-temperature repulsion resistance, etc.) at a higher level.

As the hydroxyl value, can be used a value measured by the potentiometric titration method specified in JIS K0070:1992. Details of the method are described below.

[Method for measuring hydroxyl value]

1. Reagents

(1) As the acetylation reagent, is used a solution prepared by mixing with sufficient stirring about 12.5 g (approximately 11.8 mL) of anhydrous acetic acid and pyridine added up to a total volume of 50 mL. Alternatively, is used a solution prepared by mixing with sufficient stirring about 25 g (approximately 23.5 mL) of anhydrous acetic acid and pyridine up to a total volume of 100 mL.
(2) As the titrant, is used a 0.5 mol/L potassium hydroxide (KOH) solution in ethanol.
(3) For others, toluene, pyridine, ethanol and distilled water should be ready for use.

2. Procedures

(1) Approximately 2 g of analyte is accurately weighed out in a flat-bottom flask, 5 mL of the acetylation reagent and 10 mL of pyridine are added, and an air condenser is placed on.
(2) The flask is heated in a bath at 100 °C for 70 minutes and then cooled. From the top of the condenser, 35 mL of toluene is added as a solvent and stirred. Subsequently, 1 mL of distilled water is added and the resultant is stirred to decompose any remaining anhydrous acetic acid. The flask is heated in the bath again for 10 minutes to complete the decomposition and then cooled.
(3) After rinsed with 5 mL of ethanol, the condenser is removed. Subsequently, 50 mL of pyridine is added as a solvent and the resultant is stirred.

(4) Using a volumetric pipette, is added 25 mL of the 0.5 mol/L KOH ethanol solution.

(5) Potentiometric titration is carried out with the 0.5 mol/L KOH ethanol solution. The inflection point in the resulting titration curve is taken as the final point.

(6) For a blank titration, procedures (1) to (5) are carried out without addition of the analyte.

3. Calculations

The hydroxyl value is calculated by the following equation:

$$\text{Hydroxyl value (mgKOH/g)} = [(B - C) \times f \times 28.05]/S + D$$

wherein:

B is the volume (mL) of the 0.5 mol/L KOH ethanol solution used in the blank titration;
C is the volume (mL) of the 0.5 mol/L KOH ethanol solution used to titrate the analyte;
f is the factor of the 0.5 mol/L KOH ethanol solution;
S is the weight of analyte (g);
D is the acid value;
28.05 is one half the molecular weight of KOH.

As the tackifier resin $T_{HO1}$, among the various tackifier resins listed earlier, can be used solely one species having a hydroxyl value equal to or higher than a prescribed value, or a few or more such species in a suitable combination. In a preferable embodiment, as the tackifier resin $T_{HO1}$, at least a terpene phenol resin is used. A terpene phenol resin is preferable because the hydroxyl value can be changed at will by modifying the copolymerization ratio of phenol. The ratio of the terpene phenol resin in the tackifier resin $T_{HO1}$ is more preferably about 50 % by weight or greater (e.g. 80 % by weight or greater, typically 90 % by weight or greater). Yet more preferably, the terpene phenol resin accounts for essentially all (e.g. 95 % to 100 % by weight, or even 99 % to 100 % by weight) of the tackifier resin $T_{HO1}$.

When the art disclosed herein is implemented in an embodiment that uses a PSA layer comprising a tackifier resin $T_{HO1}$, the ratio of the tackifier resin $T_{HO1}$ in the total tackifier resin is not particularly limited. The ratio can be, for instance, 10 % by weight or greater (typically 20 % by weight or greater); it can be, for instance, 70 % by weight or less (typically 60 % by weight or less). Alternatively, the tackifier resin $T_{HO1}$ may account for essentially all (e.g. 95 % to 100 % by weight, or even 99 % to 100 % by weight) of the total tackifier resin.

The PSA composition disclosed herein may comprise a tackifier resin ($T_{HO2}$) having a hydroxyl value of zero or higher and below 80 mgKOH/g as the tackifier resin $T_H$. A tackifier resin $T_{HO2}$ may be used as a substitute for a tackifier resin $T_{HO1}$ or in a combination with a tackifier resin $T_{HO1}$. A preferable embodiment comprises a tackifier resin $T_{HO1}$ having a hydroxyl value of 80 mgKOH/g or higher and a tackifier resin $T_{HO2}$.

As the tackifier resin $T_{HO2}$, solely one species or a combination of species can be used from the species having a hydroxyl value in the aforementioned ranges among the various tackifier resins described earlier. For instance, a terpene phenol resin, petroleum resin (e.g. a C5-based petroleum resin), terpene resin (e.g. β-pinene polymer), rosin-based resin (e.g. polymerized rosin), and rosin derivative resin (e.g. ester of polymerized rosin) can be used. In a preferable embodiment, at least a terpene phenol resin is used as the tackifier resin $T_{HO2}$. Terpene phenol resin is preferable because the hydroxyl value can be arbitrarily controlled by the copolymerization ratio of phenol. The ratio of the terpene phenol resin in the tackifier resin $T_{HO2}$ can be about 50 % by weight or greater (e.g. 80 % by weight or greater, typically 90 % by weight or greater). The terpene phenol resin may account for essentially all (e.g. 95 % to 100 % by weight, or even 99 % to 100 % by weight) of the tackifier resin $T_{HO2}$.

When the art disclosed herein is implemented in an embodiment that uses a PSA layer comprising a tackifier resin $T_{HO2}$, the ratio of the tackifier resin $T_{HO2}$ in the total tackifier resin is not particularly limited. The ratio can be, for instance, 10 % by weight or greater (typically 20 % by weight or greater). For instance, it can be 70 % by weight or less (typically 60 % by weight or less). Alternatively, the tackifier resin $T_{HO2}$ may account for essentially all (e.g. 95 % to 100 % by weight, or even 99 % to 100 % by weight) of the total tackifier resin.

The art disclosed herein can be preferably implemented in an embodiment where the PSA layer comprises a tackifier resin $T_{HO1}$ having a hydroxyl value of 80 mgKOH/g or greater (typically 80 mgKOH/g to 160 mgKOH/g, e.g. 80 mgKOH/g to 140 mgKOH/g) and a tackifier resin $T_{HO2}$ having a hydroxyl value of 40 mgKOH/g or greater and less than 80 mgKOH/g. In this embodiment, the relative amounts of $T_{HO1}$ and $T_{HO2}$ used can be selected so that, for instance, their weight ratio ($T_{HO1}:T_{HO2}$) is in a range of 1:5 to 5:1, or suitably in a range of 1:3 to 3:1 (e.g. 1:2 to 2:1). In a preferable embodiment, each of $T_{HO1}$ and $T_{HO2}$ is a terpene phenol resin.

In an embodiment of the art disclosed herein, the tackifier resin $T_H$ may further comprise a tackifier resin $T_{HR1}$ having an aromatic ring and a hydroxyl value of 30 mgKOH/g or less, as a tackifier resin different from the tackifier resins

$T_{HO1}$ and $T_{HO2}$. Examples of the tackifier resin having an aromatic ring include the aforementioned aromatic petroleum resins, aliphatic/aromatic copolymer-based petroleum resins, styrene-based resins, coumarone-indene resins, styrene-modified terpene resins, phenol-modified terpene resins, and rosin phenol resins. Among these, as the tackifier resin $T_{HR1}$, can be used a resin having a softening point of 120 °C or above (preferably 130 °C or above, e.g. 135 °C or above) while having a hydroxyl value of 30 mgKOH/g or lower (preferably lower than 5 mgKOH/g, e.g. lower than 1 mgKOH/g). Particularly preferable tackifier resins $T_{HR1}$ include aromatic petroleum resins and styrene-based resins (e.g. α-methylstyrene/styrene copolymer resin). The art disclosed herein can be implemented in an embodiment where the PSA layer is essentially free of a tackifier resin $T_{HR1}$.

In another preferable embodiment of the PSA disclosed herein, the tackifier resin $T_H$ may comprise, as a tackifier resin different from the tackifier resins $T_{HO1}$ and $T_{HO2}$, a tackifier resin $T_{HR2}$ having an aromatic ring while being essentially free of isoprene units, terpene structures and rosin structures. Here, the tackifier resin $T_{HR2}$ being essentially free of isoprene units, terpene structures and rosin structures refers to that the combined ratio of these structural moieties (i.e. isoprene units, terpene structures and rosin structures) in the tackifier resin $T_{HR2}$ is below 10 % by weight (more preferably below 8 % by weight, more preferably below 5 % by weight, e.g. below 3 % by weight). The ratio can be zero % by weight. The isoprene unit content, terpene structure content and rosin structure content in the tackifier resin $T_{HR2}$ can be measured, for instance, by NMR (nuclear magnetic resonance spectrometry).

Examples of a tackifier resin having an aromatic ring, but essentially free of isoprene units, terpene structures and rosin structures include the aromatic petroleum resins, aliphatic/aromatic copolymer-based petroleum resins, styrene-based resins, and coumarone-indene resins described above. Among these, one having a softening point of 120 °C or above (preferably 130 °C or above; e.g. 135 °C or above) can be used as the tackifier resin $T_{HR2}$. Particularly preferable tackifier resins $T_{HR2}$ include aromatic petroleum resins and styrene-based resins (e.g. α-methylstyrene/styrene copolymer resin). Although not particularly limited, for similar reasons as the tackifier resin $T_{HR1}$, a preferable tackifier resin $T_{HR2}$ has a hydroxyl value of 30 mgKOH/g or lower (preferably below 5 mgKOH/g, e.g. below 1mgKOH/g). Accordingly, as the tackifier resin $T_{HR2}$ in the art disclosed herein, those that qualify as the tackifier resin $T_{HR1}$ can be preferable used. Similarly, as the tackifier resin $T_{HR1}$ in the art disclosed herein, those that qualify as the tackifier resin $T_{HR2}$ can be preferably used. The art disclosed herein can be implemented in an embodiment where the PSA layer is essentially free of a tackifier resin $T_{HR2}$.

From the standpoint of increasing the shear property, the total amount of tackifier resin $T_H$ (i.e. the total amount of the tackifier resin with a softening point of 100 °C or higher) relative to 100 parts by weight of the base polymer is suitably at least 10 parts by weight, or preferably at least 20 parts by weight (e.g. at least 25 parts by weight). The maximum tackifier resin $T_H$ content relative to 100 parts by weight of the base polymer is 60 parts by weight. From the standpoint of improving the low-temperature repulsion resistance, the tackifier resin $T_H$ content relative to 100 parts by weight of the base polymer is preferably 50 parts by weight or less, or more preferably 45 parts by weight or less (e.g. 40 parts by weight or less).

Herein, from the standpoint of combining well-balanced shear property and low-temperature repulsion resistance, the ratio of the tackifier resin $T_H$ in the total tackifier resin content is suitably 50 % by weight or greater, preferably 80 % by weight or greater (e.g. 90 % by weight or greater). The art disclosed herein can be preferably implemented in an embodiment where the tackifier resin $T_H$ accounts for essentially all (e.g. 95 % to 100 % by weight, or even 99 % to 100 % by weight) of the tackifier resin.

(Tackifier resin $T_L$)

The PSA layer disclosed herein may comprise a tackifier resin $T_L$ having a softening point below 100 °C. The lowest softening point of the tackifier resin $T_L$ is not particularly limited. A species having a softening point of 40 °C or higher (typically 60 °C or higher) can be used. The hydroxyl value and the structure (e.g. the presence of an aromatic ring, presence of isoprene units, presence of terpene structures, presence of rosin structures, etc.) of tackifier resin $T_L$ are not particularly limited. A suitable one can be selected and used among the various tackifier resins (petroleum resins, styrene-based resins, coumarone-indene resins, terpene resins, modified terpene resins, rosin-based resins, rosin derivative resins, ketone-based resins, etc.) described earlier with them having a softening point below 100 °C.

In the art disclosed herein, it is important that the total tackifier resin content is in a range of 10 parts to 60 parts by weight to 100 parts by weight of the base polymer. When the total tackifier resin content is in this range, shear property and low-temperature repulsion resistance (typically initial low-temperature repulsion resistance) are combined at a high level. From the standpoint of increasing the shear property, the total tackifier resin content is preferably at least 15 parts by weight, or preferably at least 20 parts by weight (e.g. at least 30 parts by weight) to 100 parts by weight of the base polymer. From the standpoint of improving the low-temperature repulsion resistance, the total tackifier resin content is preferably 50 parts by weight or less, or more preferably 45 parts by weight or less (e.g. 40 parts by weight or less).

(Isocyanate compound)

The PSA composition disclosed herein may further comprise an isocyanate compound. According to such a PSA composition, can be obtained a PSA sheet of higher performance (e.g. having excellent shear property and low temperature repulsion resistance). As the isocyanate compound, can be used preferably a polyfunctional isocyanate (which refers to a compound having an average of two or more isocyanate groups per molecule, including a compound having an isocyanurate structure). As the polyfunctional isocyanate, can be used one, two or more species selected from various isocyanate compounds (polyisocyanates) containing two or more isocyanate groups per molecule. Examples of such a polyfunctional isocyanate include aliphatic polyisocyanates, alicyclic polyisocyanates, and aromatic polyisocyanates.

Examples of an aliphatic polyisocyanate include 1,2-ethylene diisocyanate; tetramethylene diisocyanates such as 1,2-tetramethylene diisocyanate, 1,3-tetramethylene diisocyanate, and 1,4-tetramethylene diisocyanate; hexamethylene diisocyanates such as 1,2-hexamethylene diisocyanate, 1,3-hexamethylene diisocyanate, 1,4-hexamethylene diisocyanate, 1,5-hexamethylene diisocyanate, 1,6-hexamethylene diisocyanate, and 2,5-hexamethylene diisocyanate; 2-methyl-1,5-pentane diisocyanate, 3-methyl-1,5-pentane diisocyanate, and lysine diisocyanate.

Examples of an alicyclic polyisocyanate include isophorone diisocyanate; cyclohexyl diisocyanates such as 1,2-cyclohexyl diisocyanate, 1,3-cyclohexyl diisocyanate, and 1,4-cyclohexyl diisocyanate; cyclopentyl diisocyanates such as 1,2-cyclopentyl diisocyanate and 1,3-cyclopentyl diisocyanate; hydrogenated xylylene diisocyanate, hydrogenated tolylene diisocyanate, hydrogenated diphenylmethane diisocyanate, hydrogenated tetramethylxylene diisocyanate, and 4,4'-dicyclohexylmethane diisocyanate.

Examples of an aromatic polyisocyanate include 2,4-tolylene diisocyanate, 2,6-tolylene diisocyanate, 4,4'-diphenylmethane diisocyanate, 2,4'-diphenylmethane diisocyanate, 2,2'-diphenylmethane diisocyanate, 4,4'-diphenylether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, 3,3'-dimethoxydiphenyl-4,4'-diisocyanate, xylylene-1,4-diisocyanate, and xylylene-1,3-diisocyanate.

A preferable example of an isocyanate compound is a polyfunctional isocyanate having an average of three or more isocyanate groups per molecule. Such a tri-functional or higher polyfunctional isocyanate can be a multimer (typically a dimer or a trimer), a derivative (e.g., an addition product of a polyol and two or more polyfunctional isocyanate molecules), a polymer or the like of a di-functional, tri-functional, or higher polyfunctional isocyanate. Examples include polyfunctional isocyanates such as a dimer and a trimer of a diphenylmethane diisocyanate, an isocyanurate (a cyclic trimer) of a hexamethylene diisocyanate, a reaction product of trimethylol propane and a tolylene diisocyanate, a reaction product of trimethylol propane and a hexamethylene diisocyanate, polymethylene polyphenyl isocyanate, polyether polyisocyanate, and polyester polyisocyanate. Commercial polyfunctional isocyanates include trade name DURANATE TPA-100 available from Asahi Kasei Chemicals Corporation; trade names CORONATE L, CORONATE HL, CORONATE HK, CORONATE HX, CORONATE 2096 available from Nippon Polyurethane Kogyo Co., Ltd.

When an isocyanate compound is used, its amount used is not particularly limited. For instance, relative to 100 parts by weight of the base polymer, it can be more than zero part by weight and 10 parts by weight or less (typically 0.01 part to 10 parts by weight). The amount of the isocyanate compound used to 100 parts by weight of the base polymer is preferably 0.1 part by weight or greater (typically 0.3 part by weight or greater, e.g. 0.5 part by weight or greater); it is suitably 10 parts by weight or less, or preferably 5 parts by weight or less (typically 3 parts by weight or less, e.g. 1 part by weight or less). The use of an isocyanate compound in such a range can bring about a PSA sheet having particularly well-balanced properties.

(Other components)

The PSA layer disclosed herein may comprise one, two or more species of rubbery polymer as necessary besides the base polymer as far as the effects of this invention are not impaired. The rubbery polymer can be various polymers known in the PSA field, such as rubber-based polymers, acrylic polymers, polyester-based polymers, urethane-based polymers, polyether-based polymers, silicone-based polymers, polyamide-based polymers, and fluoropolymers. The art disclosed herein can be practiced preferably in an embodiment wherein the PSA layer is essentially free of such other rubbery polymer besides the base polymer (e.g., an embodiment where the other rubbery polymer content is zero to 1 part by weight relative to 100 parts by weight of the base polymer).

The PSA composition (possibly the PSA layer) disclosed herein may contain as necessary various additives generally used in the PSA field, such as leveling agent, crosslinking agent, crosslinking co-agent, plasticizer, softening agent, filler, colorant (pigment, dye, etc.), anti-static agent, anti-aging agent, ultraviolet light absorber, anti-oxidant, photostabilizer, and so on. With respect to these various additives, those heretofore known can be used by typical methods. The PSA disclosed herein can be made preferably in an embodiment essentially free of a liquid rubber such as liquid polybutene, etc., (e.g., where the liquid rubber content relative to 100 parts by weight of the base polymer is 1 part by weight or less, or may be even zero part by weight).

In a preferable embodiment, the PSA layer may have a composition where the combined amount of the base polymer and the tackifier resin accounts for 90 % by weight or more of the total weight of the PSA (i.e., the weight of a PSA layer constituted with this PSA). For example, in a preferable embodiment, the combined amount of the base polymer and the tackifier resin is at least 90 % by weight (typically, e.g. at least 95 % by weight) or up to 99.8 % by weight (typically, e.g. up to 99.5 % by weight) of the total weight of the PSA.

In another preferable embodiment, the PSA may have a composition essentially free of a chelate compound. Herein, the chelate compound refers to, for instance, a chelate complex of an alkaline earth metal oxide and a resin (an alkyl phenol resin, etc.) having a functional group (hydroxyl group, methylol group, etc.) capable of coordinating the oxide. The art disclosed herein can be practiced preferably in an embodiment where the PSA composition is essentially free of such a chelate compound or in an embodiment containing none or at most 1 % by weight of a chelate compound. According to such an embodiment, it may be possible to obtain a PSA sheet exhibiting even greater adhesive strength.

(PSA composition)

The form of the PSA composition disclosed herein is not particularly limited, and can be, for instance, a solvent-based PSA composition containing a PSA (an adhesive component) having a composition described above in an organic solvent, a water-dispersed (typically, an aqueous emulsion-based) PSA composition containing a PSA dispersed in an aqueous solvent, a PSA composition of the hot-melt type or the like. From the standpoint of the ease of application and the latitude in the choice of a substrate, etc., a solvent-based or a water-dispersed PSA composition can be used preferably. From the standpoint of obtaining even greater adhesive properties, a solvent-based PSA composition is especially preferable.

The solvent-based PSA composition can be typically prepared as a solution containing the respective components described above in an organic solvent. The organic solvent can be selected among known or conventional organic solvents. For instance, can be used any one species or a mixture of two or more species among aromatic compounds (typically aromatic hydrocarbons) such as toluene and xylene; acetic acid esters such as ethyl acetate and butyl acetate; aliphatic or alicyclic hydrocarbons such as hexane, cyclohexane, and methyl cyclohexane; halogenated alkanes such as 1,2-dichloroethane; and ketones such as methyl ethyl ketone and acetyl acetone. While no particular limitations are imposed, the solvent-based PSA composition is suitably prepared to have a non-volatile content (NV) of at least 30 % by weight (e.g., at least 40 % by weight) or up to 65 % by weight (e.g. up to 55 % by weight). Too low an NV tends to result in higher production costs while too high an NV may lower the workability such as the ease of application, etc.

(Fabrication method)

As the method for obtaining a PSA sheet from a PSA composition, various conventionally known methods can be applied. For example, can be preferably employed a method (direct method) where the PSA composition is directly provided (typically applied) to a substrate and allowed to dry to form a PSA layer. Alternatively, can be employed a method (transfer method) where the PSA composition is provided to a releasable surface (e.g. a surface of a release liner, a release-treated back face of a support substrate, etc.) and allowed to dry to form a PSA layer on the surface, and the PSA layer is transferred to a substrate.

The PSA composition can be applied, for instance, with a known or commonly used coater such as gravure roll coater, reverse roll coater, kiss roll coater, dip roll coater, bar coater, knife coater, spray coater, or the like. From the standpoint of facilitating the crosslinking reaction and increasing the production efficiency, the PSA composition is dried preferably with heating. For example, the drying temperature can be preferably about 40 °C or higher (e.g. 50 °C or higher, or even 70 °C or higher) or about 150 °C or lower (typically, 120 °C or lower, or even 100 °C or lower). The drying time is not particularly limited while it can be about a few tens of seconds to a few minutes (e.g. within about 5 minutes, preferably about 30 seconds to 2 minutes). Afterwards, an additional drying step may be included as necessary. While the PSA layer is typically formed continuously, it may be formed in a regular pattern of dots or stripes, etc., or in a random pattern.

(Thickness of PSA layer)

Although no particular limitations are imposed, the thickness of the PSA layer is suitably about 4 $\mu$m or greater (typically 20 $\mu$m or greater, e.g. 30 $\mu$m or greater); it is suitably about 150 $\mu$m or less (typically 120 $\mu$m or less, e.g. 100 $\mu$m or less). From the standpoint of increasing the low-temperature repulsion resistance, the thickness of the PSA layer is preferably 30 $\mu$m or greater, more preferably 40 $\mu$m or greater, or yet more preferably 50 $\mu$m or greater (e.g. 60 $\mu$m or greater, or even 75 $\mu$m or greater). The substrate-containing double-faced PSA sheet can be constructed with a PSA layer having such a thickness provided on each face of the substrate. The respective PSA layers may be the same or different in thickness. While the PSA layer is typically formed continuously, it may be formed in a regular pattern of dots or stripes, etc., or in a random pattern.

<Substrate>

When the art disclosed herein is applied to a substrate-containing, double-faced or single-faced PSA sheet, a suitable substrate can be selected and used according to the intended purpose of the PSA sheet among plastic films such as polypropylene films, ethylene-propylene copolymer films, polyester films, and polyvinyl chloride films; foam sheets made of foam such as polyurethane foam, polyethylene foam, and polychloroprene foam; woven fabrics and nonwoven fabrics (meaning to include paper such as Washi and high-grade paper) of a single species or a blend, etc., of various species of fibrous substances (which can be natural fibers such as hemp and cotton; synthetic fibers such as polyester and vinylon; and semi-synthetic fibers such as acetate); and metal foil such as aluminum foil and copper foil. The plastic film (typically referring to non-porous plastic film, which should be conceptually distinguished from a woven fabric and a nonwoven fabric) may be non-stretched film, or stretched (uniaxially stretched or bi-axially stretched) film. The substrate surface to be provided with a PSA layer may have been subjected to a surface treatment such as primer coating, corona discharge treatment, and plasma treatment.

In a preferable embodiment, as the substrate, nonwoven fabric (a nonwoven fabric substrate) is used. The use of the nonwoven fabric substrate tends to increase the initial low-temperature adhesion and the shear property. Examples of the nonwoven fabric used as the substrate include nonwoven fabrics formed of natural fibers including pulp such as wood pulp, cotton, and hemp; nonwoven fabrics formed of artificial fibers (synthetic fibers) including polyester fibers such as polyethylene terephthalate (PET) fibers, rayon, vinylon, acetate fibers, polyvinyl alcohol (PVA) fibers, polyamide fibers, polyolefin fibers, and polyurethane fibers; and nonwoven fabrics formed of two or more materially different species of fibers used together. In particular, from the standpoint of the PSA's impregnating ability and repulsion resistance, nonwoven fabrics constituted with pulp or hemp (e.g. hemp pulp) and nonwoven fabrics constituted with PET fibers are preferable. The use of a nonwoven fabric substrate contributes also to increase the flexibility or the ease of hand-tearing of the PSA sheet.

A preferable nonwoven fabric (nonwoven fabric substrate) has a grammage of about 30 $g/m^2$ or less (e.g. 25 $g/m^2$ or less, typically 20 $g/m^2$ or less). A nonwoven fabric having such a grammage is suitable for fabrication of a lightweight PSA sheet having excellent adhesive properties. From the standpoint of the repulsion resistance, a nonwoven fabric having a grammage less than 18 $g/m^2$ (e.g. 16 $g/m^2$ or less, typically 15 $g/m^2$ or less) is preferable. From the standpoint of increasing the strength of the substrate itself, the grammage is preferably 10 $g/m^2$ or greater (e.g. 12 $g/m^2$ or greater, typically 13 $g/m^2$ or greater).

The bulk density (which can be calculated by dividing grammage by the thickness) of the nonwoven fabric substrate is suitably about 0.20 $g/cm^3$ or greater, preferably 0.25 $g/cm^3$ or greater (e.g. 0.30 $g/cm^3$ or greater); it is suitably about 0.50 $g/cm^3$ or less, or preferably 0.40 $g/cm^3$ or less (e.g. 0.35 $g/cm^3$ or less). With the bulk density being within these ranges, the substrate itself will have suitable strength, making itself greatly susceptible to PSA impregnation. From the standpoint of the repulsion resistance, it is particularly preferable to use a nonwoven fabric substrate having a bulk density of about 0.25 $g/cm^3$ to 0.40 $g/cm^3$ (e.g. 0.30 $g/cm^3$ to 0.35 $g/cm^3$).

The nonwoven fabric substrate may comprise, in addition to the constituent fibers as described above, a resin component such as starch (e.g. cationized starch), polyacrylamide, viscose, polyvinyl alcohol, urea formaldehyde resin, melamine formaldehyde resin, and polyamide polyamine epichlorohydrin resin. The resin component may function as a paper strengthening agent for the non-fabric substrate. By using such a resin component as necessary, the strength of the nonwoven fabric substrate can be adjusted. The nonwoven fabric substrate in the art disclosed herein may comprise as necessary additives generally used in the fields related to production of nonwoven fabrics, such as yield-increasing agent, drainage-aiding agent, viscosity-adjusting agent, and dispersant.

The thickness of the substrate can be suitably selected in accordance with the purpose. It is generally about 2 $\mu$m or greater (typically 10 $\mu$m or greater); it is preferably 500 $\mu$m or less (typically 200 $\mu$m or less). When nonwoven fabric is used as the substrate, its thickness is suitably about 150 $\mu$m or less. From the standpoint of sufficiently wetting the entire substrate with PSA, the thickness is preferably 100 $\mu$m or less (e.g. 70 $\mu$m or less). In view of the handling properties during fabrication of PSA sheets, the thickness is preferably 10 $\mu$m or greater (e.g. 25 $\mu$m or greater). From the standpoint of the repulsion resistance, the thickness is preferably 30 $\mu$m or greater (e.g. 35 $\mu$m or greater, typically 40 $\mu$m or greater); it is preferably 60 $\mu$m or less (e.g. 50 $\mu$m or less, typically 45 $\mu$m or less). The nonwoven fabric substrate disclosed herein preferably satisfies two or more features among the aforementioned preferable ranges of grammage, thickness and bulk density (e.g. grammage and thickness, more preferably all of grammage, thickness and bulk density). This can bring about a PSA sheet with highly-balanced adhesive properties (e.g. repulsion resistance, cohesion, peel strength, etc.).

<Release liner>

There are no limitations to the release liner, and any conventional release paper or the like can be used. For example, the following can be used: a release liner having a release layer on a surface of a substrate such as a plastic film and a sheet of paper; a release liner formed from a poorly-adhesive material such as a fluorine-based polymer (polytetrafluoroethylene, etc.) and a polyolefin-based resin (polyethylene, polypropylene, etc.). The release layer can be formed, for instance, by processing the surface of the substrate with a release agent such as a silicone-based, a long-chain alkyl-based, a fluorine-based, and a molybdenum disulfide-based release agent.

<Properties of PSA sheet>

The PSA sheet has properties such that ball tack test (low-temperature ball tack test) results in Ball No. 4 or higher in an environment at 0 °C. To put such properties in other words, the adhesive face of the PSA layer results in Ball No. 4 or higher in ball tack test in an environment at 0 °C. APSA sheet that shows at least certain ball tack in a low-temperature environment will bond well to adherend immediately after applied, thereby preventing peeling (turning up and lifting off) that is caused by insufficient tack and has a tendency of being significant in a low-temperature environment. As a result, even then, it can continuously maintain the adhesion with the adherend; and therefore, it exhibits excellent low-temperature repulsing resistance. The adhesive face of the PSA layer has properties such that ball tack test results in Ball No. 5 or higher, more preferably Ball No. 6 or higher, or yet more preferably Ball No. 7 or higher (e.g. Ball No. 8, 9 or higher). The low-temperature ball tack test is carried out by the method described later in Examples.

The PSA sheet disclosed herein may show initial low-temperature repulsion resistance, such that the lift-off distance at 5 seconds is 15 mm or less in the initial low-temperature repulsion test carried out by the method described later in Examples. APSA sheet satisfying this property tends to be unsusceptible to peeling (turning up and lifting off) in a low-temperature environment. The lift-off distance in the initial low-temperature repulsion resistance test is preferably 5 mm or less, or more preferably 3 mm or less.

The PSA sheet disclosed herein preferably gives at least two hours of holding time in a 40 °C shear property test carried out while a 500 g load is applied. The PSA sheet disclosed herein more preferably shows a displacement distance of 5 mm or less from the initial position at two hours in the shear property test. The PSA sheet satisfying these properties may exhibit excellent holding power. The displacement distance is more preferably 2 mm or less (e.g. 1 mm or less, typically 0.5 mm or less, or even 0.3 mm or less), or particularly preferably 0.2 mm or less (or even 0.1 mm or less). The shear property test is carried out by the method described later in Examples.

The overall thickness of the PSA sheet disclosed herein is not particularly limited. From the standpoint of making it thinner, smaller, lighter and resource-saving, etc., it is preferably about 1000 $\mu$m or smaller (e.g. 500 $\mu$m or smaller, typically 300 $\mu$m or smaller). From the standpoint of assuring good adhesive properties, it is suitably 50 $\mu$m or larger (e.g. 70 $\mu$m or larger, typically 100 $\mu$m or larger).

<Applications>

The PSA sheet disclosed herein is useful for bonding components in various OA appliance, home electronics, automobiles, etc. (e.g. for fixing various parts in such products). Because of its excellent low-temperature repulsion resistance, the PSA sheet disclosed herein can be preferably used for bonding and fixing various materials in environments (e.g. outdoor environments) that can be low-temperature environments in winter such as construction sites or in low-temperature rooms (e.g. cold rooms). The PSA sheet disclosed herein can be particularly preferably used in an application where a dressing sheet used for decorating interior walls of buildings are fixed onto the interior walls.

Several working examples related to the present invention are described below, but the present invention is not intended to be limited to these examples. In the description below, "parts" and "%" are based on the weight unless otherwise specified. The physical properties in the description below were measured or evaluated as follows.

(1) Low-temperature ball tack test

In an environment at 0 °C, the test apparatus set (ball tack board, measurement balls, wash toluene, etc.) and a measurement sample (a PSA sheet) are left standing for one hour. In the same environment, based on JIS Z0237, rolling ball tack (30° slope angle) is determined The largest Ball No. of balls held was recorded as the ball tack.

(2) Initial low-temperature repulsion resistance test

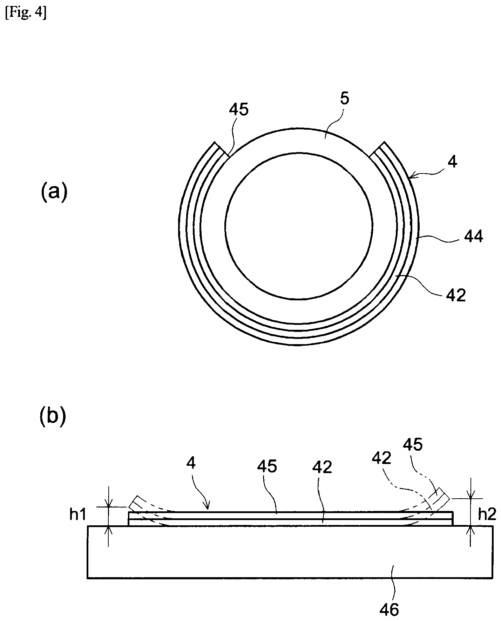

Each PSA sheet (typically a double-faced PSA sheet) was cut along with release liner(s) into a 10 mm wide by 90 mm long size. The surface of an aluminum plate (10 mm wide, 90 mm long, and 0.5 mm thick) was washed with toluene. The first release liner was removed from the PSA sheet and the exposed adhesive face was applied to the surface of the aluminum plate to fabricate a test piece with the PSA layer backed with the aluminum plate. The test piece was left standing at 5 °C for one day. Subsequently, as shown in Fig. 4(a), the length direction of test piece 4 was warped around the perimeter of cylindrical screw vial 5 of 40 mm diameter for 10 seconds. Subsequently, the second release liner 44 was removed from the PSA layer 42 of test piece 4; and, as shown in Fig. 4(b), it was lightly press-bonded with a 500 g pressing roller to the surface of pre-washed plaster board (adherend) 46 at 5 °C. After an elapse of 5 seconds at the same temperature, as shown by the imaginary line in Fig. 4(b), heights h1 and h2 of two edges of test piece 4 that lifted off the surface of adherend 46 were determined The average value between the two edges was determined as the lift-off height (lift-off distance) of test piece 4.

In this repulsion resistance test, three test pieces (n = 3) were used for each Example and the average value of these test pieces was recorded. Based on the test results, the initial low-temperature repulsion resistance was graded on the following scale:

E (Excellent): lift-off distance of 5 mm or less
G (Good): lift-off distance of greater than 5 mm and 15 mm or less
P (Poor): poor repulsion resistance with lift-off distance greater than 15 mm

It is noted that when the test is carried out with a single-faced PSA sheet, the back face of the PSA sheet is tightly fixed with a commercial high-strength double-faced PSA sheet or the like onto the aluminum plate and, by the same procedures, the adhesive face of the resultant subject to measurement can be lightly press-bonded to the adherend to determine initial low-temperature repulsion resistance.

(3) Shear property test

To the first adhesive face (the first PSA layer's adhesive face) of each PSA sheet (typically a double-faced PSA sheet), was adhered a 25 $\mu$m thick PET film (trade name LUMIRROR S10 available from Toray Industries, Inc.). The resultant was cut into a 10 mm wide by 100 mm long size to prepare a test piece. The second adhesive face (the second PSA layer's adhesive face) of the test piece was exposed; and at room temperature (23 °C), the test piece was press-bonded over a 10 mm wide by 20 mm long bonding area to a Bakelite plate (phenol resin plate) as the adherend with a 2 kg roller moved back and forth once. The test piece thus bonded on the adherend was left standing in the same environment for 30 minutes. Subsequently, the adherend was vertically suspended with the length direction of the test piece being in the vertical direction. To the free end of the test piece, a 500 g load was applied. Based on JIS Z0237, with the load applied, it was left standing in an environment at 40 °C for two hours. After left standing in this manner, the distance that the test piece was displaced (displacement distance) was measured.

When the test is carried out using a single-faced PSA sheet as a test piece, it is unnecessary to apply PET film to the first adhesive face of the test piece.

<Example 1>

With stirring, were mixed 100 parts of a styrene-isoprene block copolymer (available from Zeon Corporation, product name QUINTAC 3520, 15 % styrene content, 78 % diblock fraction) as a base polymer, 10 parts of a terpene phenol resin, 8 parts of a terpene resin, 0.75 part by solid content of an isocyanate compound (available from Nippon Polyurethane Industry Co., Ltd., trade name CORONATE L), 1 part of an anti-aging agent, and toluene as a solvent to prepare a PSA composition at 50% NV

Here, as the terpene phenol resin, two species, namely, trade name YS POLYSTAR S145 (softening point 145 °C, hydroxyl value 100 mgKOH/g) and trade name YS POLYSTAR T145 (softening point 145 °C, hydroxyl value 60 mgKOH/g) both available from Yasuhara Chemical Co., Ltd., were used at a weight ratio of 1:1 in a combined amount of 10 parts. As for the terpene resin, was used product name YS RESIN PX1150N (softening point 115 °C, hydroxyl value below 1 mgKOH/g) available from Yasuhara Chemical Co., Ltd. As the anti-aging agent, was used product name IRGANOX CB612 available from BASF Corporation (a blend of product names IRGAFOS 168 and IRGANOX 565 both available from BASF Corporation at a weight ratio of 2:1).

The resulting PSA composition was applied to a first face of a 12 $\mu$m thick PET film (available from Toray Industries, Inc., trade name LUMIRROR S10) as a substrate and dried at 120 °C for 3 minutes to form a 64 $\mu$m thick PSA layer. To the PSA layer, was adhered a release liner treated with a silicone-based release agent. Subsequently, to the second face (opposite of the first face) of the PET film, in the same manner as the first face, a 64 $\mu$m thick PSA layer was formed and a release liner was adhered thereto. A double-faced PSA sheet according to this Example was thus fabricated.

<Examples 2 to 10>

The tackifier species and their amounts used were changed as shown in Table 1. Otherwise in the same manner as Example 1, were fabricated double-faced PSA sheets according to the respective Examples. In Table 1, NEOPOLYMER 150 is an aromatic petroleum resin (product name NISSEKI NEOPOLYMER 150, softening point 155 °C, hydroxyl value below 1 mgKOH/g) available from JX Nippon Oil & Energy Corporation.

<Example 11>

As the substrate, in place of the PET film, was used nonwoven fabric (product name SP-14K available from Daifuku Paper Mfg. Co., Ltd.). Otherwise in the same manner as Example 1, was fabricated a double-faced PSA sheet according to this Example.

<Examples 12 to 20>

The tackifier species and their amounts used were changed as shown in Table 2. Otherwise in the same manner as Example 11, were fabricated double-faced PSA sheets according to the respective Examples.
The double-faced PSA sheets according to the respective Examples were subjected to the low-temperature ball tack test, initial low-temperature repulsion resistance test and shear property test. The results are shown in Tables 1 and 2.

Table 1

Table 1

| | | Ex. 1 | Ex. 2 | Ex. 3 | Ex.4 | Ex. 5 | Ex. 6 | Ex. 7 | Ex. 8 | Ex. 9 | Ex. 10 |
|---|---|---|---|---|---|---|---|---|---|---|---|
| Base polymer (parts) | Quintac3520 | 100 | 100 | 100 | 100 | 100 | 100 | 100 | 100 | 100 | 100 |
| Tackifier resin (parts) | S145 | 5 | 20 | - | - | 10 | - | - | 30 | 20 | 40 |
| | T145 | 5 | - | 20 | 10 | 10 | 20 | - | 30 | 20 | 40 |
| | PX1150N | 8 | - | - | 15 | 15 | 30 | - | 45 | 30 | 60 |
| | Neopolymer150 | - | - | - | - | - | - | - | - | 40 | - |
| | Total | 18 | 20 | 20 | 25 | 35 | 50 | 0 | 105 | 110 | 140 |
| Low-temp ball tack | | No. 8 | No. 7 | No. 7 | No. 7 | No. 6 | No. 6 | - | ≤ No. 1 | ≤ No. 1 | ≤ No. 1 |
| Initial low-temp repulsion resistance | | G | E | E | E | E | G | P | P | P | P |
| Shear property (mm) | | 0.2 | 0.2 | 0.1 | 0.1 | 0.1 | 0.1 | 0.1 | 0.2 | 0.2 | 0.2 |

Table 2

Table 2

| | | Ex. 11 | Ex. 12 | Ex. 13 | Ex. 14 | Ex. 15 | Ex. 16 | Ex. 17 | Ex. 18 | Ex. 19 | Ex. 20 |
|---|---|---|---|---|---|---|---|---|---|---|---|
| Base polymer (parts) | Quintac3520 | 100 | 100 | 100 | 100 | 100 | 100 | 100 | 100 | 100 | 100 |

(continued)

| | | Ex. 11 | Ex. 12 | Ex. 13 | Ex. 14 | Ex. 15 | Ex. 16 | Ex. 17 | Ex. 18 | Ex. 19 | Ex. 20 |
|---|---|---|---|---|---|---|---|---|---|---|---|
| Tackifier resin (parts) | S145 | 5 | 20 | - | - | 10 | - | - | 30 | 20 | 40 |
| | T145 | 5 | - | 20 | 10 | 10 | 20 | - | 30 | 20 | 40 |
| | PX1150N | 8 | - | - | 15 | 15 | 30 | - | 45 | 30 | 60 |
| | Neopolymer150 | - | - | - | - | - | - | - | - | 40 | - |
| | Total | 18 | 20 | 20 | 25 | 35 | 50 | 0 | 105 | 110 | 140 |
| Substrate | | Nonwoven fabric | | | | | | | | | |
| Low-temp ball tack | | No. 9 | No. 8 | No. 8 | No. 8 | No. 7 | No. 7 | - | ≤ No. 1 | ≤ No. 1 | ≤ No. 1 |
| Initial low-temp repulsion resistance | | G | E | E | E | E | G | P | P | P | P |
| Shear property (mm) | | 0.1 | 0.1 | 0.1 | 0.1 | 0.1 | 0.1 | 0.1 | 0.1 | 0.1 | 0.1 |

As in Tables 1 and 2, with respect to the PSA sheets according to Examples 1 to 6 and 11 to 16 using at least 10 parts by weight of tackifier resin having a softening point of 100 °C or higher and accounting for 10 parts to 60 parts by weight relative to 100 parts by weight of the base polymer, all resulted in Ball No. 4 or higher in the low-temperature ball tack test. These Examples showed displacement distances of 0.2 mm or less in the shear property test and exhibited good initial low-temperature repulsion resistance as well. On the other hand, Examples 7 and 17 using less than 10 parts by weight of tackifier resin resulted in lift-off distances of about 30 mm in the initial low-temperature repulsion resistance test. With respect to Examples 8 to 10 and 18 to 20 using more than 60 parts by weight of tackifier resin, as their Ball No. 1 results in the low-temperature ball tack test indicate, they all showed poor initial low-temperature repulsion resistance. In particular, in the initial low-temperature repulsion resistance test, the lift-off distances were 20 mm in Examples 8 and 18 using 105 parts by weight of tackifier resin, 26 mm in Examples 9 and 19 using 110 parts by weight of tackifier resin, and 30 mm in Examples 10 and 20 using 140 parts by weight of tackifier resin, showing a tendency that with increasing amount of tackifier resin above 60 parts by weight, the initial low-temperature repulsion resistance decreased.

These results indicate that greater low-temperature repulsion resistance is obtained while maintaining shear property, according to a PSA sheet with PSA whose base polymer is a block copolymer of a monovinyl-substituted aromatic compound and a conjugated diene compound, wherein the PSA comprises 10 parts to 60 parts by weight of tackifier resin to 100 parts by weight of the base polymer with at least 10 parts by weight of tackifier resin $T_H$ having a softening point of 100 °C or higher; and the PSA sheet shows a ball tack of 4 or higher in an environment at 0 °C.

From comparison between Examples 1 to 6 (Table 1) and Examples 11 to 16 (Table 2), a tendency is seen that even when the same PSA composition is used, greater low-temperature ball tack property and shear property are displayed in those using nonwoven fabric as the substrate. Presumably, this is attributed to tighter adhesion to the adherend obtained with the nonwoven fabric substrate.

Reference Signs List

1, 2, 3 PSA sheets
11 first PSA layer
12 second PSA layer
15 substrate
21, 22 release liners

## Claims

1. A pressure-sensitive adhesive sheet that has a pressure-sensitive adhesive layer comprising a base polymer and a tackifier resin, wherein

the base polymer is a block copolymer of a monovinyl-substituted aromatic compound and a conjugated diene compound,

the tackifier resin content is 10 parts to 60 parts by weight to 100 parts by weight of the base polymer,

the tackifier resin comprises a tackifier resin $T_H$ having a softening point of 100 °C or higher,

the tackifier resin $T_H$ content is at least 10 parts by weight to 100 parts by weight of the base polymer,

the ratio of the tackifier resin $T_H$ in the total tackifier resin content is 50 % by weight or greater,

the tackifier resin $T_H$ comprises a terpene phenol resin as a tackifier resin $T_{H1}$, the terpene phenol resin has a softening point of 120 °C or higher and 200 °C or lower,

the terpene phenol resin content is 10 parts to 30 parts by weight to 100 parts by weight of the base polymer,

the pressure-sensitive adhesive layer has an adhesive face having properties such that ball tack test results in Ball No. 4 or higher in an environment at 0 °C,

the softening point of the tackifier resin is defined as a value measured based on the softening point test method specified in JIS K5902 and JIS K2207, and

the ball tack test is carried out by leaving the test apparatus set and the measurement sample standing for one hour in said environment at 0 °C, and determining in the same environment, based on JIS Z0237, rolling ball tack, where the largest Ball No. of balls held is recorded as the ball tack.

2.   The pressure-sensitive adhesive sheet according to Claim 1, wherein the base polymer is a styrene-based block copolymer.

3.   The pressure-sensitive adhesive sheet according to Claim 2, wherein the styrene-based block copolymer includes up to 20 % styrene by weight.

4.   The pressure-sensitive adhesive sheet according to Claim 2 or 3, wherein the styrene-based block copolymer has a diblock ratio of 60 % by weight or higher.

5.   The pressure-sensitive adhesive sheet according to any one of Claims 1 to 4, wherein the base polymer comprises at least a styrene-isoprene block copolymer or a styrene-butadiene block copolymer.

6.   The pressure-sensitive adhesive sheet according to any one of Claims 1 to 5, wherein the tackifier resin comprises at least one species selected from the group consisting of petroleum resin, styrene-based resin, coumarone-indene resin, terpene resin, modified terpene resin, rosin-based resin, rosin derivative resin and ketone-based resin.

7.   The pressure-sensitive adhesive sheet according to any one of Claims 1 to 6, wherein the tackifier resin $T_H$ comprises at least one species selected from the group consisting of terpene resin, rosin phenol resin, polymerized rosin and polymerized rosin ester.

8.   The pressure-sensitive adhesive sheet according to any one of Claims 1 to 7, wherein the tackifier resin $T_H$ accounts for essentially all of the tackifier resin.

9.   The pressure-sensitive adhesive sheet according to any one of Claims 1 to 8, wherein the tackifier resin $T_{H1}$ comprises two or more species of terpene phenol resin.

10.  The pressure-sensitive adhesive sheet according to any one of Claims 1 to 9, wherein the tackifier resin $T_H$ comprises a tackifier resin $T_{H2}$ having a softening point lower than that of the tackifier resin $T_{H1}$.

11.  The pressure-sensitive adhesive sheet according to Claim 10, wherein the tackifier resin $T_{H2}$ comprises a terpene resin.

12.  The pressure-sensitive adhesive sheet according to any one of Claims 1 to 11, wherein the pressure-sensitive adhesive layer comprises a tackifier resin $T_{HO1}$ having a hydroxyl value of 80 mgKOH/g or greater.

13.  The pressure-sensitive adhesive sheet according to Claim 12, wherein the pressure-sensitive adhesive layer further comprises, as the tackifier resin $T_H$, a tackifier resin $T_{HO2}$ having a hydroxyl value of 0 or higher and less than 80 mgKOH/g.

14.  The pressure-sensitive adhesive sheet according to any one of Claims 1 to 13, wherein the pressure-sensitive adhesive layer is formed from a pressure-sensitive adhesive composition comprising an isocyanate compound.

**15.** The pressure-sensitive adhesive sheet according to any one of Claims 1 to 14, wherein the pressure-sensitive adhesive layer has a thickness of 30 $\mu$m or greater.

**16.** The pressure-sensitive adhesive sheet according to any one of Claims 1 to 15, comprising a substrate, and first and second pressure-sensitive adhesive layers as the pressure-sensitive adhesive layers that are supported on two faces of the substrate, respectively.

**17.** The pressure-sensitive adhesive sheet according to Claim 16, wherein the substrate is plastic film or nonwoven fabric.

**Patentansprüche**

**1.** Haftklebefolie, welche eine Haftklebeschicht, umfassend ein Basispolymer und ein Klebrigmacherharz, aufweist, wobei

das Basispolymer ein Blockcopolymer einer monovinylsubstituierten aromatischen Verbindung und einer konjugierten Dienverbindung ist,
der Gehalt des Klebrigmacherharzes 10 bis 60 Gewichtsteile, bezogen auf 100 Gewichtsteile des Basispolymers, beträgt,
das Klebrigmacherharz ein Klebrigmacherharz $T_H$ mit einem Erweichungspunkt von 100 °C oder mehr umfasst,
der Gehalt des Klebrigmacherharzes $T_H$ mindestens 10 Gewichtsteile, bezogen auf 100 Gewichtsteile des Basispolymers, beträgt,
der Anteil des Klebrigmacherharzes $T_H$ in dem Gesamtgehalt des Klebrigmacherharzes 50 Gewichts-% oder mehr beträgt,
das Klebrigmacherharz $T_H$ ein Terpenphenolharz als ein Klebrigmacherharz $T_{H1}$ umfasst,
das Terpenphenolharz einen Erweichungspunkt von 120 °C oder mehr und 200 °C oder weniger aufweist,
der Gehalt des Terpenphenolharzes 10 bis 30 Gewichtsteile, bezogen auf 100 Gewichtsteile des Basispolymers, beträgt,
die Haftklebeschicht eine Haftfläche mit derartigen Eigenschaften aufweist, dass die Kugel-Klebrigkeitsprüfung Kugel-Nr. 4 oder mehr in einer Umgebung von 0 °C ergibt,
der Erweichungspunkt des Klebrigmacherharzes als ein Wert, gemessen auf Basis des Erweichungspunktprüfverfahrens wie in JIS K5902 und JIS K2207 angegeben, definiert ist, und
die Kugel-Klebrigkeitsprüfung durchgeführt wird, indem der Prüfvorrichtungssatz und die Messprobe für eine Stunde in der Umgebung bei 0 °C belassen werden und in der gleichen Umgebung auf Basis von JIS Z0237 die Rollkugelklebrigkeit bestimmt wird, wobei die größte Kugel-Nr. von gehaltenen Kugeln als die Kugelklebrigkeit aufgezeichnet wird.

**2.** Haftklebefolie nach Anspruch 1, wobei das Basispolymer ein Blockcopolymer auf Styrolbasis ist.

**3.** Haftklebefolie nach Anspruch 2, wobei das Blockcopolymer auf Styrolbasis bis zu 20 Gewichts-% Styrol einschließt.

**4.** Haftklebefolie nach Anspruch 2 oder 3, wobei das Blockcopolymer auf Styrolbasis ein Diblockverhältnis von 60 Gewichts-% oder mehr aufweist.

**5.** Haftklebefolie nach einem der Ansprüche 1 bis 4, wobei das Basispolymer zumindest ein Styrol-Isopren-Blockcopolymer oder ein Styrol-Butadien-Blockcopolymer umfasst.

**6.** Haftklebefolie nach einem der Ansprüche 1 bis 5, wobei das Klebrigmacherharz mindestens eine Art, ausgewählt aus der Gruppe, bestehend aus Petroleumharz, Harz auf Styrolbasis, Cumaron-Inden-Harz, Terpenharz, modifiziertem Terpenharz, Harz auf Kolophoniumbasis, Harz aus Kolophoniumderivat und Harz auf Ketonbasis, umfasst.

**7.** Haftklebefolie nach einem der Ansprüche 1 bis 6, wobei das Klebrigmacherharz $T_H$ mindestens eine Art, ausgewählt aus der Gruppe, bestehend aus Terpenharz, Kolophoniumphenolharz, polymerisiertem Kolophonium und polymerisiertem Kolophoniumester, umfasst.

**8.** Haftklebefolie nach einem der Ansprüche 1 bis 7, wobei das Klebrigmacherharz $T_H$ im Wesentlichen das gesamte Klebrigmacherharz ausmacht.

9. Haftklebefolie nach einem der Ansprüche 1 bis 8, wobei das Klebrigmacherharz $T_{H1}$ zwei oder mehr Arten eines Terpenphenolharzes umfasst.

10. Haftklebefolie nach einem der Ansprüche 1 bis 9, wobei das Klebrigmacherharz $T_H$ ein Klebrigmacherharz $T_{H2}$ mit einem Erweichungspunkt, welcher niedriger als derjenige des Klebrigmacherharzes $T_{H1}$ ist, umfasst.

11. Haftklebefolie nach Anspruch 10, wobei das Klebrigmacherharz $T_{H2}$ ein Terpenharz umfasst.

12. Haftklebefolie nach einem der Ansprüche 1 bis 11, wobei die Haftklebeschicht ein Klebrigmacherharz $T_{HO1}$ mit einem Hydroxylwert von 80 mgKOH/g oder mehr umfasst.

13. Haftklebefolie nach Anspruch 12, wobei die Haftklebefolie als das Klebrigmacherharz $T_H$ weiter ein Klebrigmacherharz $T_{HO2}$ mit einem Hydroxylwert von 0 oder mehr und weniger als 80 mgKOH/g umfasst.

14. Haftklebefolie nach einem der Ansprüche 1 bis 13, wobei die Haftklebeschicht aus einer Haftklebezusammensetzung, umfassend eine Isocyanatverbindung, gebildet ist.

15. Haftklebefolie nach einem der Ansprüche 1 bis 14, wobei die Haftklebeschicht eine Dicke von 30 $\mu$m oder mehr aufweist.

16. Haftklebefolie nach einem der Ansprüche 1 bis 15, umfassend ein Substrat und erste und zweite Haftklebeschichten, welche jeweils auf zwei Flächen des Substrats aufgebracht sind, als die Haftklebeschichten.

17. Haftklebefolie nach Anspruch 16, wobei das Substrat eine Kunststofffolie oder ein Vlies ist.

**Revendications**

1. Feuille adhésive sensible à la pression présentant une couche d'adhésif sensible à la pression comprenant un polymère de base et une résine tackifiante, dans laquelle

   le polymère de base est un copolymère séquencé d'un composé aromatique substitué par un monovinyle et d'un composé diène conjugué,
   la teneur en résine tackifiante constitue 10 à 60 parties en poids, sur base de 100 parties en poids du polymère de base,
   la résine tackifiante comprend une résine tackifiante $T_H$ présentant un point de ramollissement de 100°C ou plus,
   la teneur en résine tackifiante $T_H$ constitue au moins 10 parties en poids sur base de 100 parties en poids du polymère de base,
   le rapport de résine tackifiante $T_H$ dans la teneur en résine tackifiante totale est de 50% en poids ou plus,
   la résine tackifiante $T_H$ comprend une résine de terpène-phénol comme résine tackifiante $T_{H1}$, la résine de terpène-phénol présente un point de ramollissement de 120°C ou plus et de 200% ou moins,
   la teneur en résine de terpène-phénol constitue 10 à 30 parties en poids, sur base de 100 parties en poids du polymère de base,
   la couche d'adhésif sensible à la pression a une face adhésive ayant des propriétés telles que l'essai d'adhérence à la bille donne comme résultat la bille n° 4 ou plus dans un environnement à 0°C, le point de ramollissement de la résine tackifiante est défini comme une valeur mesurée sur base de la méthode d'essai de point de ramollissement spécifiée dans les normes JIS K5902 et JIS K2207, et
   l'essai d'adhérence à la bille est réalisé en laissant l'ensemble de l'appareil d'essai et l'échantillon de mesure en place pendant une heure dans ledit environnement à 0°C, et déterminant dans le même environnement, sur base de la norme JIS Z0237, l'adhérence à la bille roulante, où le numéro de bille le plus grand des billes retenues, est enregistré en tant qu'adhérence à la bille.

2. Feuille adhésive sensible à la pression selon la revendication 1, dans laquelle le polymère de base est un copolymère séquencé à base de styrène.

3. Feuille adhésive sensible à la pression selon la revendication 2, dans laquelle le copolymère séquencé à base de styrène comprend jusqu'à 20% en poids de styrène.

**4.** Feuille adhésive sensible à la pression selon la revendication 2 ou 3, dans laquelle le copolymère séquencé à base de styrène présente un rapport dibloc de 60% en poids ou plus.

**5.** Feuille adhésive sensible à la pression selon l'une quelconque des revendications 1 à 4, dans laquelle le polymère de base comprend au moins un copolymère séquencé de styrène-isoprène ou un copolymère séquencé de styrène-butadiène.

**6.** Feuille adhésive sensible à la pression selon l'une quelconque des revendications 1 à 5, dans laquelle la résine tackifiante comprend au moins une espèce sélectionnée parmi le groupe consistant en résine de pétrole, résine à base de styrène, résine de coumarone-indène, résine de terpène, résine de terpène modifié, résine à base de rosine, résine dérivée de rosine et résine à base de cétone.

**7.** Feuille adhésive sensible à la pression selon l'une quelconque des revendications 1 à 6, dans laquelle la résine tackifiante $T_H$ comprend au moins une espèce sélectionnée parmi le groupe consistant en résine de terpène, résine rosine-phénol, rosine polymérisée et ester de rosine polymérisée.

**8.** Feuille adhésive sensible à la pression selon l'une quelconque des revendications 1 à 7, dans laquelle la résine tackifiante $T_H$ constitue essentiellement la totalité de la résine tackifiante.

**9.** Feuille adhésive sensible à la pression selon l'une quelconque des revendications 1 à 8, dans laquelle la résine tackifiante $T_{H1}$ comprend deux espèces, ou plus, de la résine de terpène-phénol.

**10.** Feuille adhésive sensible à la pression selon l'une quelconque des revendications 1 à 9, dans laquelle la résine tackifiante $T_H$ comprend une résine tackifiante $T_{H2}$ présentant un point de ramollissement inférieur à celui de la résine tackifiante $T_{H1}$.

**11.** Feuille adhésive sensible à la pression selon la revendication 10, dans laquelle la résine tackifiante $T_{H2}$ comprend une résine de terpène.

**12.** Feuille adhésive sensible à la pression selon l'une quelconque des revendications 1 à 11, dans laquelle la couche d'adhésif sensible à la pression comprend une résine tackifiante $T_{HO1}$ d'une valeur hydroxyle de 80 mgKOH/g ou plus.

**13.** Feuille adhésive sensible à la pression selon la revendication 12, dans laquelle la couche d'adhésif sensible à la pression comprend en outre en tant que résine tackifiante $T_H$, une résine tackifiante $T_{HO2}$ présentant une valeur hydroxyle de 0 ou plus et inférieure à 80 mgKOH/g.

**14.** Feuille adhésive sensible à la pression selon l'une quelconque des revendications 1 à 13, dans laquelle la couche d'adhésif sensible à la pression est faite à partir d'une composition d'adhésif sensible à la pression comprenant un composé isocyanate.

**15.** Feuille adhésive sensible à la pression selon l'une quelconque des revendications 1 à 14, dans laquelle la couche d'adhésif sensible à la pression a une épaisseur de 30 $\mu$m ou plus.

**16.** Feuille adhésive sensible à la pression selon l'une quelconque des revendications 1 à 15, comprenant un substrat, et des première et deuxième couches d'adhésif sensible à la pression en tant que couches d'adhésif sensible à la pression, lesquelles sont supportées sur respectivement deux faces du substrat.

**17.** Feuille adhésive sensible à la pression selon la revendication 16, dans laquelle le substrat est un film plastique ou un tissu non tissé.

[Fig. 1]

1

11A
11
15A
15
15B
12
21A
12A
21
21B

[Fig. 2]

2

11A
21
11
11B
22

[Fig. 3]

3

11A
21
11
15A
15
15B

[Fig. 4]

(a)

(b)

**EP 3 345 979 B1**

**Patent documents cited in the description**

- JP 2001123140 A
- JP 2001342441 A
- JP H10287858 B
- JP 2015028146 A
- US 2015079388 A1
- EP 2848665 A1
- JP 2013216852 A